# EUROPEAN PATENT APPLICATION

(11) **EP 1 582 445 A1**
(43) Date of publication of application: **05.10.2005**
(21) Application number: 04075973.0
(22) Date of filing: 30.03.2004
(51) Int. Cl.: B62D 61/10, B62D 7/04

(54) **Mining truck**

(71) Applicant: de Jongh, Eddy, 8172 AV Vaassen (NL)
(72) Inventor: de Jongh, Eddy, 8172 AV Vaassen (NL)
(74) Representative: 't Jong, Bastiaan Jacob

(57) **Abstract**

The invention relates to a vehicle (1) for transporting heavy loads, which vehicle comprises:
- a chassis;
- at least four oscillating axles (4) suspended to the chassis in at least two longitudinal rows (2,3), each axle (4) having only two wheels (5), one on each side of the axle (4), and wherein each wheel (5) is driven; and
- a control system for controlling the suspension of each axle;
wherein at least two axles (4) are steerable.

## Description

De invention relates to a vehicle for transporting heavy loads, especially to a vehicle for use in surface mines. Such vehicles are used to transport large amounts of soil and minerals from the excavators to a location where the soil and minerals can be further processed. Such mining trucks typically can carry a load of approximately one hundred tons or more.

Known, mining trucks capable of carrying such large loads are typically several metres high and wide. In order to support the load and transfer it to the ground very large tires having diameters of over two and a halve metres are used. For the rear axle it is common to use a pair of tires on each side of the axle, in order to carry the heavy load.

Such vehicles are not allowed to be driven, when it is raining. Because of the combination of the rain and the soil on which the vehicles drive, such vehicles according to the prior art can not get sufficient grip. Therefore as soon as it rains such vehicles have to be stopped, which means that a complete mine has to stop as no transport of the excavated soil and minerals is possible.

Another problem with those vehicles according to the prior art is that in the case of a mal-function. Because the vehicle drives over rough roads, the tires are subjected to heavy wear. As soon as a tire becomes flat, the vehicle comes to a halt and the tire has first to be changed, before the vehicle can continue. Another problem is the drive line. It is common that only the rear axle is driven, so all power has to be transferred to just one axle. Because of the heavy loads, the rough roads and sometimes the inexperience of the drivers, the drive line is very badly treated. As soon as a mal-function occurs in this drive line the vehicle again comes to a stop and drive line has first to be repaired before the vehicle can continue.

It is an object of the invention to provide a vehicle which can operate also when it is raining and which suffers less of any mal-function to the vehicle.

This object is achieved by a vehicle according to the invention, which comprises:
- a chassis;
- at least four oscillating axles suspended to the chassis in at least two longitudinal rows, each axle having only two wheels, one on each side of the axle, and wherein each wheel is driven; and
- a control system for controlling the suspension of each axle;
wherein at least two axles are steerable.

By using the oscillating axles with on each side just one wheel good contact of each wheel with the ground is assured in most cases. So the load can be transferred through all the wheels of all axles, which enables one to use smaller tires and thus cheaper tires. Also if one tire breaks down, there are sufficient tires left to support the complete load and enable the vehicle to proceed to a location where exchange of the tire is simple. Furthermore, because all tires have good contact with the soil the power to drive the vehicle is also easily transferred to the ground. The control system for controlling the suspension ensures always a good contact of the wheels to the ground and if necessary can lift one axle if one of the tires is getting flat to protect this tire from completely being ruined by continuing to drive on this tire.

In a preferred embodiment of the vehicle according to the invention each wheel comprises an electric motor. With an electric motor it is rather simple to drive the several wheels, but the electric motor can also be used as a generator and brake, when the vehicle drives downhill. This generated energy can be stored and used for driving the vehicle.

Preferably, the vehicle according to the invention comprises at least one diesel-electric generator for providing current to the electric motors. Diesel-electric generators comprises a diesel motor and a generator. This provides for a mobile power plant, which provides the energy for the electric motors. When using several diesel-electric generators one can switch on and turn off the diesel electric generators depending on the required power. This enables one to operate the diesel motor at the most efficient number of revolutions.

In another preferred embodiment of the vehicle according to the invention each longitudinal row comprises a number of axles, and the center axle is non-steerable. By setting the center axle at a fixed position one can achieve a better straight line behaviour, than when all axles are steerable.

In yet another embodiment the rear axles are locked at high speeds and are only unlocked at lower speeds, when a higher degree of manoeuvrability is required.

In just another embodiment of the vehicle according to the invention the suspension of each axle comprises an hydraulic cylinder. This hydraulic cylinder provides the necessary suspension, but it can also be used to lift the axle upward or to push the axle downward. The control system can control these hydraulic cylinders, such that the wheels are always in contact with the ground or if a tire is flat, the respective axle can be pulled in.

In yet another preferred embodiment of the vehicle according to the invention the control system comprises a level detector for controlling the suspension to level the chassis of the vehicle. This enables one to keep the vehicle straight, also when the road is very rough or a bit slanted, which would vehicles according to the prior art tilled over which has an adverse effect to the stability of the vehicle.

These and other advantages of the invention will be elucidated in conjunction with the company drawings.

Figure 1 shows a perspective view of an embodiment of a vehicle according to the invention.

Figure 2 shows a side view of the vehicle according to figure 1 on rough terrain.

Figure 3 shows a front side view of the vehicle according to figure 2.

Figure 4 shows a partially cross sectional view of an axle of the vehicle according to figure 1.

Figure 5 shows a perspective view of the axle according to figure 4.

Figure 6 shows a second embodiment of a vehicle according to the invention.

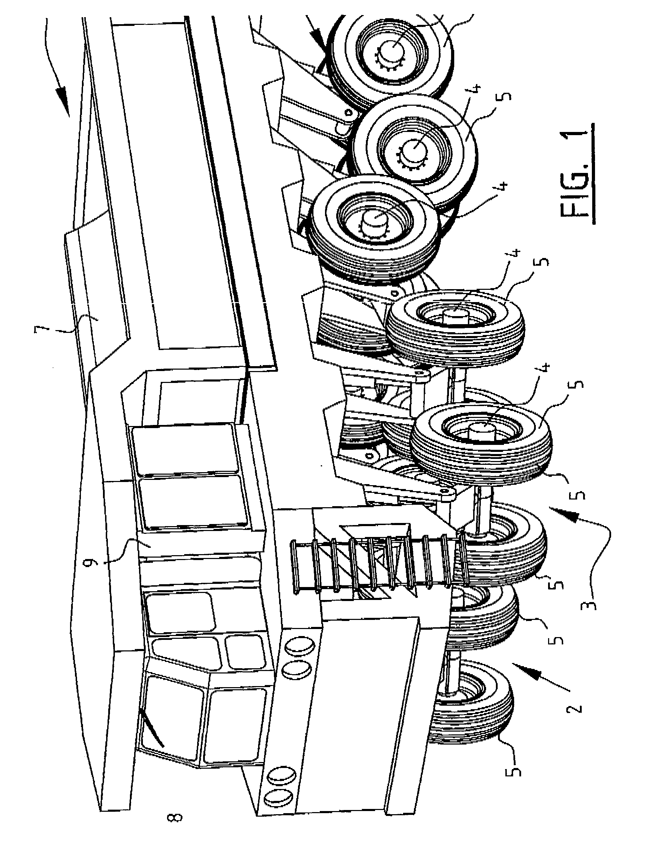

Figure 1 shows a vehicle 1 with two rows 2,3 of axles 4. Each axle 4 has on each end a single wheel 5. The axles 4 are suspended to the chassis 6 of the vehicle 1. On top of the chassis 6 a dump body 7 is arranged in which the load can be carried. In front of this dump body 7 a cabin 8 is arranged for the driver and between the dump body 7 and the cabin 8 a room 9 is provided for the diesel electric generators and the necessary electronics.

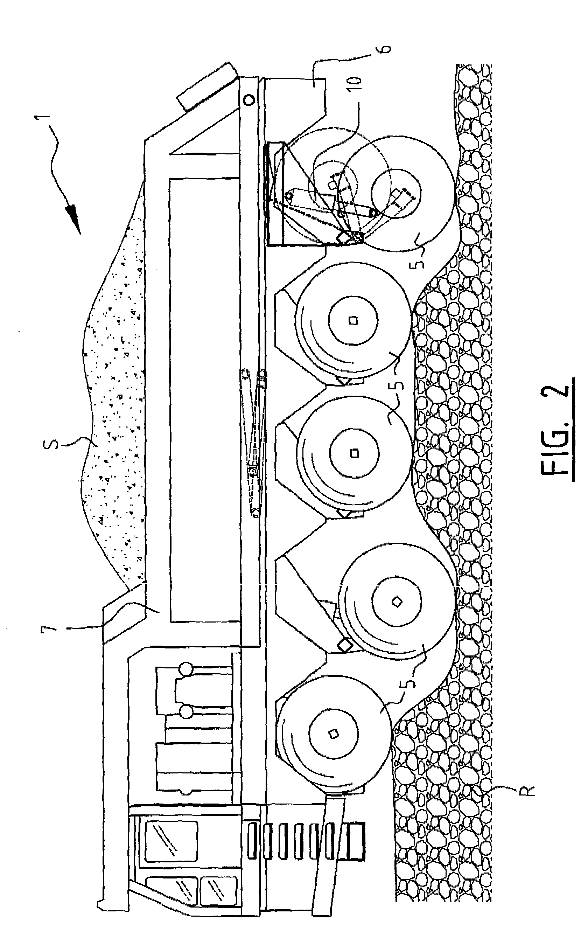

Figure 2 shows a side view of the vehicle 1 according to figure 1. The dump body 7 is loaded with soil and minerals S. The vehicle 1 drives over a very rough road R and it is shown that by controlling the stroke of the suspension of the axles all wheels 5 can maintain contact with the road R. This is enabled by controlling the cylinder 10 of each suspension of each axle.

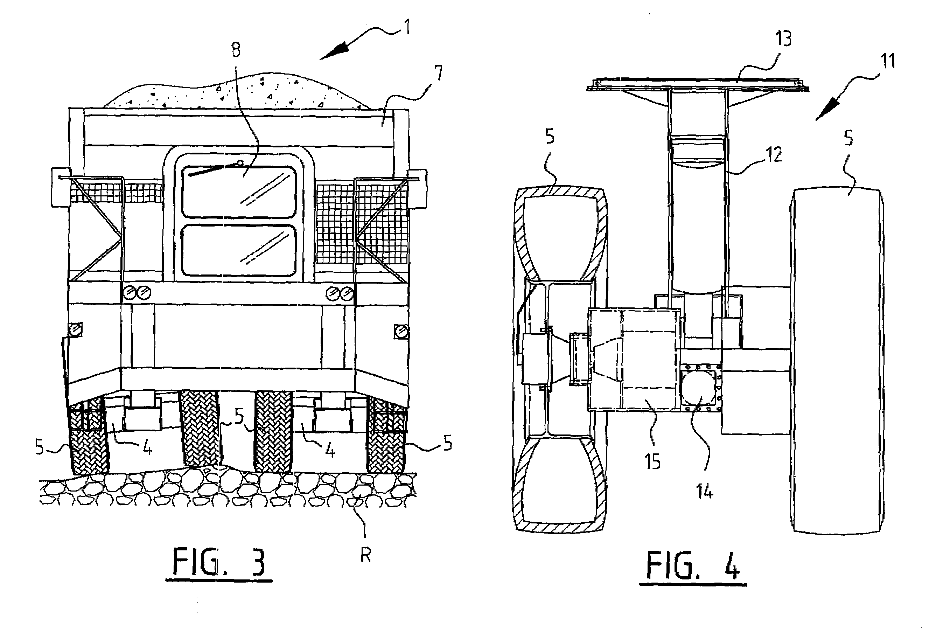

Figure 3 shows a front side view of the vehicle 1 according to the invention. The vehicle 1 is driving over a rough road R which is unequal and partially slanted. Due to the oscillating axles 4 all wheels 5 can maintain contact to the road R. By controlling the suspension it can also be ensured that the vehicle 1 is level. The advantage of using just one wheel 5 on each side of each axle 4 is that each tire is loaded appropriately. If twinned tires were to be used it is possible due to potholes into the road that only one of the two twin tires is loaded and that the other one is floating above the pothole. With the vehicle according to the invention this is avoided. Also when twin tires would be used rocks can be pressed between the two twin tires, which rocks can damage the tires.

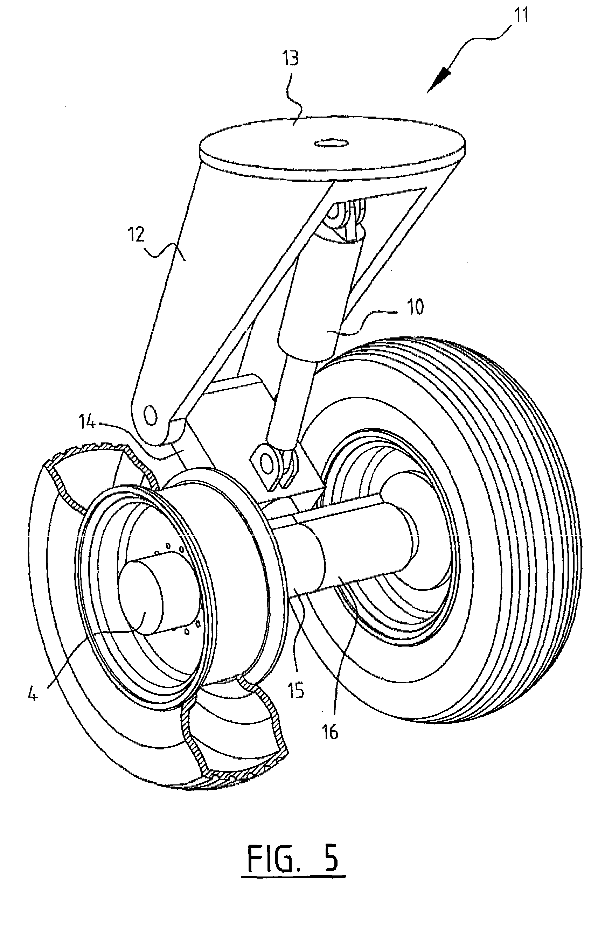

Figures 4 and 5 show a suspension 11 for an axle 4. The suspension 11 has a main support arm 12, which is rotatably arranged to the chassis 6 by a turn table 13. To the support arm 12 a oscillating axle 4 is arranged, which position in relation to the support arm 12 can be adjusted by hydraulic cylinder 10. At the end of the oscillating axle 4 the axle 4 is rotatably arranged. Around the axle 4 two electric motors 15,16 are arranged in order to drive the wheels 5. The wheels are fitted with smaller tires than usual. This provides for a cost effective solution. Also when tires are worn out, the cost for replacing a smaller tire is far less expensive than for replacing tires having diameters of more than two and a halve metres as is common with prior art vehicles.

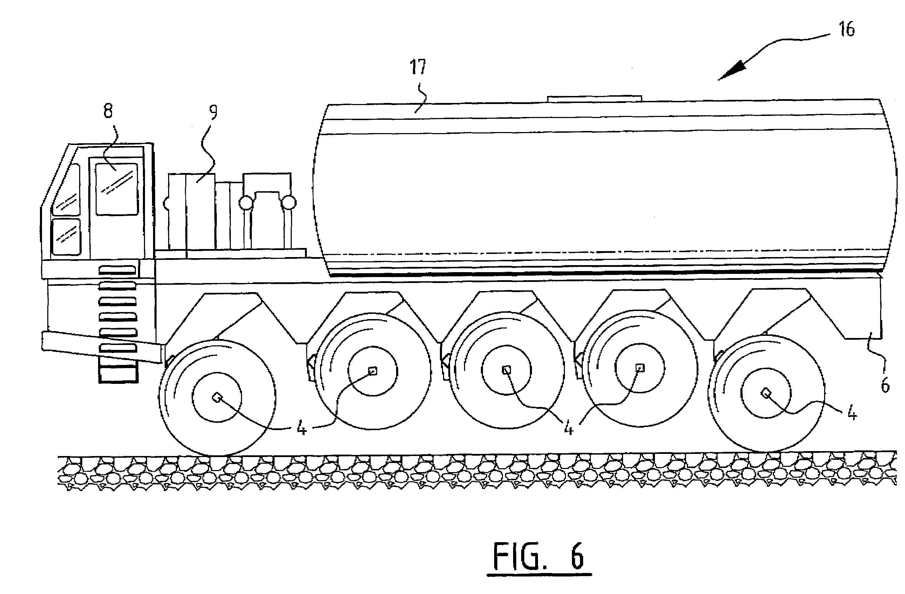

Figure 6 shows a second embodiment 16 of a vehicle according to the invention. This vehicle 16 has also a chassis 6 and a number ot axles 4 with tires 5 suspended thereon. In stead of a dump body a fluid tank 17 is arranged. This fluid tank 17 can be used to provide the excavators with fuel or to transport water. If the vehicle 16 is unloaded a number of axles can be lifted up. The vehicle 16 can be provided with a quick exchange system for exchanging superstructures, such as a dump body and a fluid tank. For the exchange, the vehicle is lowered, while supporting for example the dump body at a fixed height. The vehicle can then be driven under a for example fluid tank and then be brought to the original level, such that the fluid tank is lifted and mounted onto the vehicle.

An additional advantage of a vehicle according to the invention is that due to the construction with two longitudinal rows of axles, the suspensions of these axles are placed more to the outside than with vehicles according to the prior art, providing more stability to such a vehicle. Also because the vehicle can be lowered, when there is a flat road, the load in the dump body 7 or fluid tank is placed lower, providing also for an increased stability.

Due to the large number of wheels 5, the pressure of the wheels onto the ground is less than with vehicles according to the prior art. This enables lighter road constructions and thus cheaper road constructions. Especially in surface mines roads are constantly created, as the mine moves on through the landscape. Also due to the lower ground pressure the penetration resistance, of the wheels penetrating into the road, is also lower.

Furthermore, the mining vehicle according to the invention can be equipped with an anti-blocking system (ABS). Due to the smaller wheels, it is possible to provide a braking system with ABS, which increases the safety of the vehicle.

## Claims

1. Vehicle for transporting heavy loads, which vehicle comprises:
- a chassis;
- at least four oscillating axles suspended to the chassis in at least two longitudinal rows, each axle having only two wheels, one on each side of the axle, and wherein each wheel is driven; and
- a control system for controlling the suspension of each axle;
wherein at least two axles are steerable.

2. Vehicle according to claim 1, wherein each wheel comprises an electric motor.

3. Vehicle according to claim 2, comprising at least one diesel-electric generator for providing current to the electric motors.

4. Vehicle according to any of the preceding claims, wherein each longitudinal row comprises an odd number of axles, and wherein the center axle is non-steerable.

5. Vehicle according to any of the preceding claims, wherein the suspension of each axle comprises a hydraulic cylinder.

6. Vehicle according to any of the preceding claims, wherein the control system comprises a level detector for controlling the suspension to level the chassis of the vehicle.
